## Europäisches Patentamt

## European Patent Office

## Office européen des brevets

(19)

(11) Veröffentlichungsnummer: **0 111 887**
**B1**

(12) # EUROPÄISCHE PATENTSCHRIFT

(45) Veröffentlichungstag der Patentschrift:
01.04.87

(51) Int. Cl.⁴: **B 65 G 67/04**, B 65 D 19/42

(21) Anmeldenummer: **83112574.5**

(22) Anmeldetag: **14.12.83**

(54) Verfahren und Vorrichtung zum Beladen eines Transportbehälters oder Containers.

(30) Priorität: **15.12.82 DE 3246347**

(43) Veröffentlichungstag der Anmeldung:
**27.06.84 Patentblatt 84/26**

(45) Bekanntmachung des Hinweises auf die Patenterteilung:
**01.04.87 Patentblatt 87/14**

(84) Benannte Vertragsstaaten:
**AT BE CH DE FR GB IT LI NL SE**

(56) Entgegenhaltungen:
**DE - A - 2 818 659**
**US - A - 3 524 412**

(73) Patentinhaber: **Planmarine Engineering GmbH,
Ekkehardstrasse 15, D-7700 Singen (DE)**

(72) Erfinder: **Althammer, Heinz, Panoramastrasse 6,
D-7251 Heimsheim (DE)**

(74) Vertreter: **Hiebsch, Gerhard F., Dipl.-Ing., Hiebsch &
Allgeier Patentanwälte Erzbergerstrasse 5A
Postfach 464, D-7700 Singen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren sowie eine Vorrichtung zum Beladen der Tragfläche eines mit einer etwa vertikalen Ladeöffnung versehenen Transportbehälters oder Containers mit Stückgut, insbesondere mit gestapelten Packeinheiten, das auf der Ladefläche einer fahrbaren Palette, eines Rolltrailers od. dgl. gestapelt und auf diesem in Schubrichtung in den Laderaum des Transportbehälters eingeführt wird (DE-A 2 818 659).

Das Umschlagen von Stückgütern ist bekanntlich unverhältnismässig zeitaufwendig und kostenintensiv. Dies trifft nicht nur für das Beladen von Schiffen zu, sondern auch für das Füllen von Transportbehältern wie Containern oder Kastenaufbauten von Lastwagen. Eine Beschleunigung solcher Vorgänge konnte durch die Einführung von Paletten erzielt werden, welche vorab mit dem Ladegut versehen und dann beispielsweise von Gabelstaplern in den Transportbehälter hineingefahren werden; der Transportbehälter ist dann gefüllt, wenn mehrere beladene Paletten nebeneinander angeordnet und üblicherweise auch verzurrt sind. Somit lassen auch Paletten eine Vielzahl von Arbeitsvorgängen für die Beladung eines Transportbehälters notwendig werden.

Derartigen Paletten gegenüber bieten ein aus der DE-A 2 818 659 bekanntes Verfahren sowie eine dazu verwendete Vorrichtung der eingangs erwähnten Art den Vorzug vereinfachter Beladung; in einen Container mit stirnseitiger Öffnung wird über eine Laderampe oder -strasse eine auf einer Vielzahl von Rollen fahrbare Palette geringer Höhe mit Stückgut eingeschoben und am Bestimmungsort mit dem Stückgut wieder entfernt. Dem beschriebenen Vorzug beim Ladevorgang steht der Nachteil gegenüber, dass die Palette nach DE-A 2 818 659 bei vermindertem Ladevolumen das Ladegewicht erheblich erhöht.

Angesichts dieses Standes der Technik hat sich der Erfinder das Ziel gesetzt, eine weitergehende Vereinfachung des Beladens von Transportbehältern zu finden und ein diesbezügliches Verfahren sowie eine Vorrichtung dazu zu schaffen.

Zur Lösung dieser Aufgabe führt, dass das Stückgut durch Zurückführen des Rolltrailers gegen die Schubrichtung aus dem Laderaum auf dessen Tragfläche abgelegt wird.

Die erfindungsgemässe Vorrichtung zeichnet sich dadurch aus, dass der Ladeöffnung des Transportbehälters eine lösbare Abstreifeinrichtung zugeordnet ist, welche die Ladeöffnung oberhalb der Ladefläche des Rolltrailers od. dgl. überspannt und mit der Tragfläche des Transportbehälters einen horizontal verlaufenden Spalt bildet, durch welchen der Rolltrailer wieder nach aussen führbar ist. Dazu ist die Höhe dieses Spaltes bevorzugt gleich oder geringfügig grösser als die Bauhöhe des Rolltrailers, damit dieser ohne Hindernis herausgezogen, die auflastende Fracht jedoch möglichst grossflächig gehalten werden kann; jene Abstreifeinrichtung stellt ein Widerlager für das Stückgut beim Abziehen des Rolltrailers dar.

Es liegt auch im Rahmen der Erfindung, dass die Ladefläche des Rolltrailers bzw. der aus der DE-A 2 818 659 bekannten, auf Rollen fahrbaren Palette geringer Bauhöhe reibungsmindernd ausgestaltet, bevorzugt von quer zur genannten Schubrichtung angeordneten Tragrollen gebildet, ist. Mit diesem Rolltrailer, dessen Aussenmasse geringfügig geringer als die Innenmasse des Transportbehälters sein sollen, kann das gesamte Stückgut für einen Transportbehälter gleichzeitig diesem zugeführt werden, wonach der auf den genannten Tragrollen ruhende Stapel von Stückgütern gegen einen Rücktransport durch jene Abstreifeinrichtung gesichert und der Rolltrailer unter der Abstreifeinrichtung wieder gegen seine Schubrichtung herausgezogen wird.

Dank der vorgesehenen Tragrollen ist die Reibung zwischen Stückgut und Rollrailer so vermindert, dass das Abstreifen der Ladung ohne weiteres möglich ist.

Als besonders günstig hat es sich erwiesen, dass die Abstreifeinrichtung einen Rahmen mit wenigstens einem dessen Rahmenfeld überspannenden Klappflügel aufweist und die Masse des Rahmens jenen eines die Ladeöffnung begrenzenden Türrahmens entsprechen; während des Abstreifvorganges sind Abstreifeinrichtung und Türrahmen zeitweise fest miteinander verbunden; hierzu werden bevorzugt die üblichen Halteösen herangezogen, welche am Türrahmen als Gegenorgane für bekannte Stangenriegel seiner Türflügel vorgesehen sind. Letztere werden im übrigen während des beschriebenen Ladevorganges an die Seitenwände geklappt und bilden so kein Hindernis für die Befestigung der Abstreifeinrichtung.

Als besonders günstig hat es sich erwiesen, am Rahmen zwei miteinander eine geschlossene Fläche bildende Klappflügel seitlich anzulenken, welche gegen die Schubrichtung, also zu der vom Türrahmen abgekehrten Rahmenseite hin, schwenkbar sind. Dabei sollen die Klappflügel in ihrer miteinander fluchtenden Schliesslage möglichst stabil durch wenigstens einen Querriegel verbunden werden, der in von den Klappflügeln abstehende Konsolen von oben her eingeschoben wird in einer schon von mittelalterlichen Toranlagen her bekannten Weise. Diese überlieferte Verriegelungsform ist einfach herzustellen und besonders stabil.

Die Abstreifeinrichtung wird – wie bereits erläutert – für den Beladevorgang an den Transportbehälter angebaut und bevorzugt vom Gabelstapler herangebracht, welcher auch den Rolltrailer fährt. Dazu hat es sich als besonders günstig erwiesen, die Abstreifeinrichtung mit einer Auffahrrampe für den Rolltrailer zu einer transportierbaren Einheit fest zu verbinden, wobei der Spalt zur Herausnahme des Rolltrailers zwischen der Fahrfläche der Auffahrrampe und der Unterkante der Klappflügel verläuft.

Im Rahmen der Erfindung liegt eine Auffahrrampe, die in Schubrichtung längsschnittlich keilförmig ausgebildet und deren Fahrfläche von der – an der hohen Stirnseite, der Rampenstirn, gegebenenfalls festliegenden Abstreifeinrichtung – abwärts geneigt ist.

Von besonderer – und selbständig erfinderischer – Bedeutung ist zur Vereinfachung des Ladevorganges, dass die Auffahrrampe nahe der Rampenstirn mit Rädern sowie mit Anschlusselementen versehen ist, wobei nach einem weiteren Merkmal der Erfindung von der Rampenstirn wenigstens ein die Fahrfläche verlängerndes Brückenblech oder ein entsprechender Kragstreifen abragt. Dieser legt sich auf die Containerbodenfläche auf.

Als günstig hat es sich erwiesen, die Abstreifeinrichtung an der Rampenstirn der Auffahrrampe fest oder mittels der Anschlusselemente lösbar festzulegen.

Erfindungsgemäss weist die Auffahrrampe auf in Fahrrichtung verlaufenden Längsträgern und diese verbindenden Querstegen Platten als Fahrfläche auf, die beidseits von Seitenborden begrenzt ist. Dabei soll bevorzugt jeder Langsträger ein L-förmiges Profil sowie zur Rampenstirn hin von zunehmender Steghöhe sein; die Höhe des Seitenbords nimmt zur Rampenstirn zu, jedes Seitenbord endet nach oben hin in einem nach aussen abragenden Horizontalstreifen.

Von der erfindungsgemässen fahrbaren Auffahrrampe ragt nahe der Rampenstirn ein Bolzen für wenigstens eine Schwinge ab, die andernends mit einem der Räder über eine Radachse verbunden ist; bevorzugt wird/werden das Rad bzw. die Räder eines Seitenbords zwischen einem Schwingenpaar gehalten.

Aus Gründen besserer Anpassbarkeit soll wenigstens eine Schwinge eines Seitenbords nahe ihres Rades über ein Teleskopbein mit einem Festpunkt der Auffahrrampe verbunden sein. Das Teleskopbein besteht nach der Erfindung aus einends an der Auffahrrampe angelenkten Lenkerzylinder.

Das erfindungsgemässe Verladesystem wird noch dadurch verbessert, dass der Rolltrailer an wenigstens einer Stirnseite einen parallel zu dieser verlaufenden Kupplungssteg mit abwärts gerichteter Kante aufweist, die in eine aufwärts offene Kupplungsrinne als Gegenkupplungsglied einsetzbar ist; diese Kupplungsrinne ist an einen Kupplungsarm festgelegt, der seinerseits am Gabelstapler vertikal und horizontal bewegbar bzw. drehbar angebracht ist.

Um das An- und Auskuppeln zu vereinfachen, bildet nach einem weiteren Merkmal der Erfindung die Rückwand einer den Kupplungssteg aufnehmenden Kupplungskaverne einen Anschlag für jenes Gegenkupplungsglied.

Im Rahmen der Erfindung liegt es, dass der Kupplungsarm horizontal drehbar angeordnet und gegen die Rückstellkraft eines Kraftspeichers aus einer Mittelstellung nach beiden Seiten geschwenkt zu werden vermag.

Bevorzugt umgibt der Kupplungsarm mit einer Drehhülse einen vertikalen Achsbolzen des Zugfahrzeuges; der Achsbolzen ist bevorzugt zwischen Lagerlaschen festgelegt, der Kraftspeicher eine Schraubenfeder mit frei endenden Tangentialstäben. Jedes dieser Federenden liegt einer Seite eines Quersteges des Kupplungsarmes an.

Erfindungsgemäss ist der Kupplungsarm zur Kupplungsrinne geneigt. Auch soll an der Kupplungsrinne eine Gleitfläche für den Kupplungssteg vorgesehen sein.

Nach weiteren Merkmalen der Erfindung weist die Kupplungsrinne eine lösbar den in der Kupplungsrinne sitzenden Kupplungssteg haltende Sicherungseinrichtung auf, bevorzugt einen quer zum Rinnenprofil verlaufenden Sicherungsstift, welcher – nach dem Einsetzen des Kupplungsstegs – selbständig verschiebbar ausgebildet ist.

Weitere Verbesserungen können darin gesehen werden, dass das Heck des Rolltrailers bzw. der Rollpalette mit einer stossdämpfenden Formleiste ausgestattet ist, deren Oberfläche geneigt verläuft und somit ein sanftes Absetzen des Stückgutes auf die Tragfläche des Transportbehälters begünstigt, und/oder die Aussenmasse des Rolltrailers od. dgl. mit Spiel den entsprechenden Innenmassen des Transportbehälters angepasst sind. Ausserdem hat es sich als günstig erwiesen, die Auffahrrampe nahe des Rampenhecks mit wenigstens einem Steuerbügel zu versehen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in Schrägsicht

Fig. 1 einen Transportbehälter mit vorgesetzter Beladeeinrichtung während seiner Beladung;

Fig. 2 einen Teil des Transportbehälters nach Aufnahme der Ladung;

Fig. 3 den Transportbehälter in geschlossenem Zustand;

Fig. 4 die Beladeeinrichtung der Fig. 1 mit Auffahrrampe während ihres Transportes;

Fig. 5 die Beladeeinrichtung in einer anderen Betriebsstellung;

Fig. 6 die in Fig. 1 dargestellten Teile nach dem Beladevorgang;

Fig. 7 ein vergrössertes und geschnittenes Detail aus Fig. 1, 6;

Fig. 8 eine andere Ausführungsform des in Fig. 7 wiedergegebenen Details in gegenüber dieser vergrösserter, teilweise geschnittener Seitenansicht;

Fig. 9 eine Untersicht zu Fig. 8;

Fig. 10 eine Auffahrrampe in Draufsicht;

Fig. 11 eine Seitenansicht der Auffahrrampe;

Fig. 12 den Schnitt durch Fig. 10 nach deren Linie XII–XII;

Fig. 13 die Rampenstirn der Auffahrrampe in Draufsicht;

Fig. 14 einen vergrösserten Teilschnitt durch Fig. 10 nach deren Linie XIV–XIV;

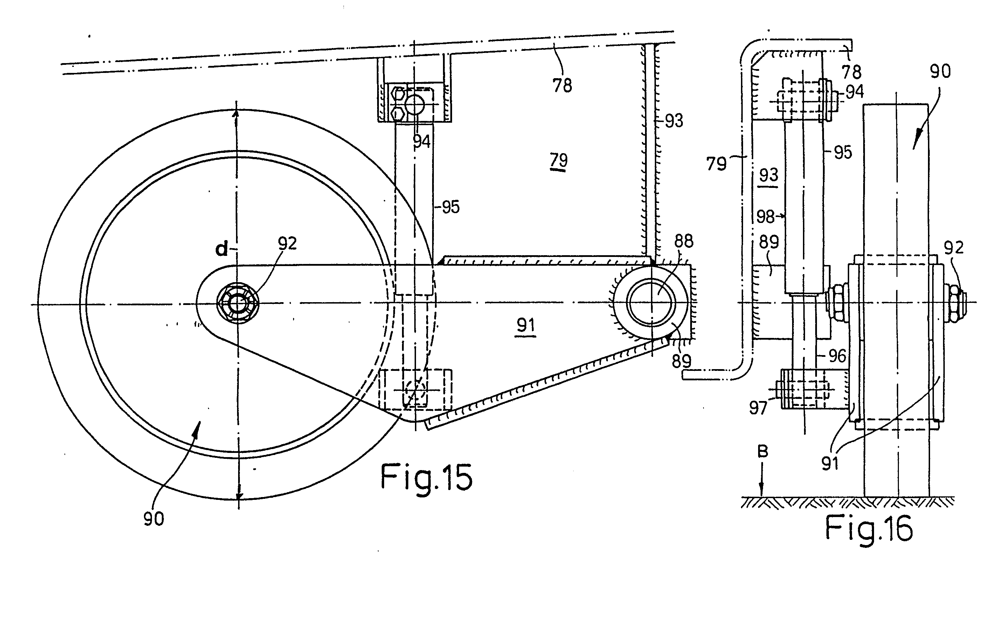

Fig. 15 ein Detail der Fig. 11 in vergrösserter Draufsicht;

Fig. 16 die Seitenansicht zu Fig. 15.

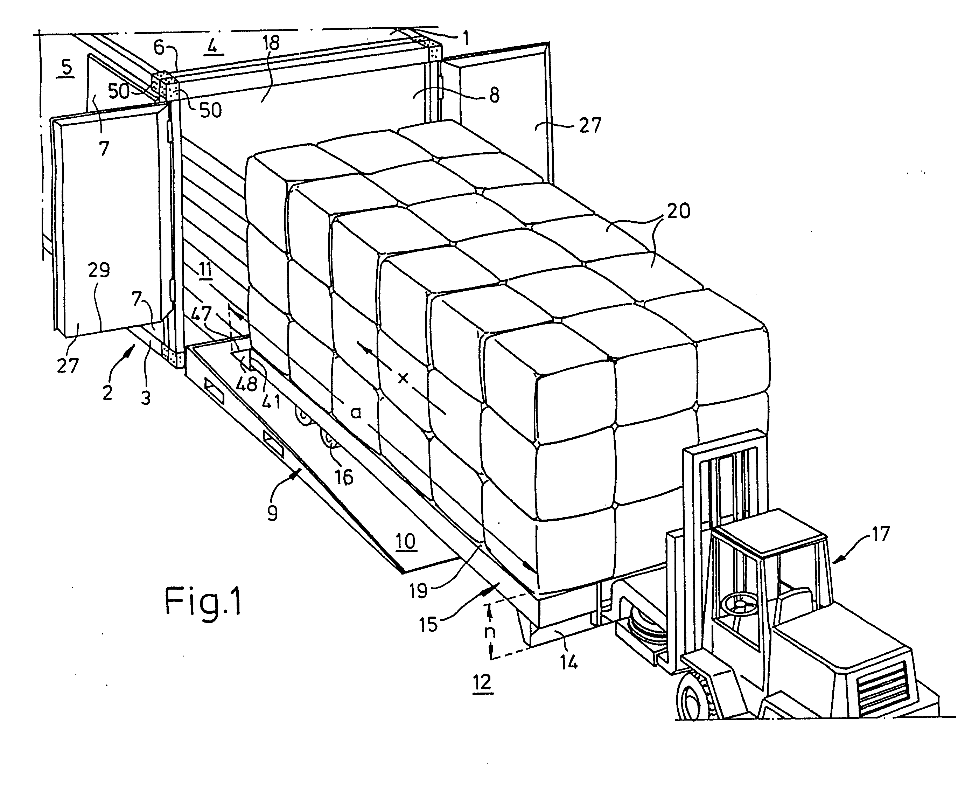

Das offene Heck 1 eines nicht weiter wiedergegebenen Transportbehälters oder Containers 2 aus Bodenplatte 3, Dach 4 und diese verbindenden Wandplatten 5 weist einen Heckrahmen 6 für zwei Türflügel 7 auf, die in Fig. 1 an jene Wandplatte 5 geklappt sind.

An der vom Heckrahmen 6 begrenzten Heck- oder Ladeöffnung 8 ist eine keilförmige Auffahrrampe 9 zu erkennen, deren geneigte Fahrfläche 10 die Oberfläche 11 der Bodenplatte 3 mit einer Hofoberfläche 12 od. dgl. verbindet.

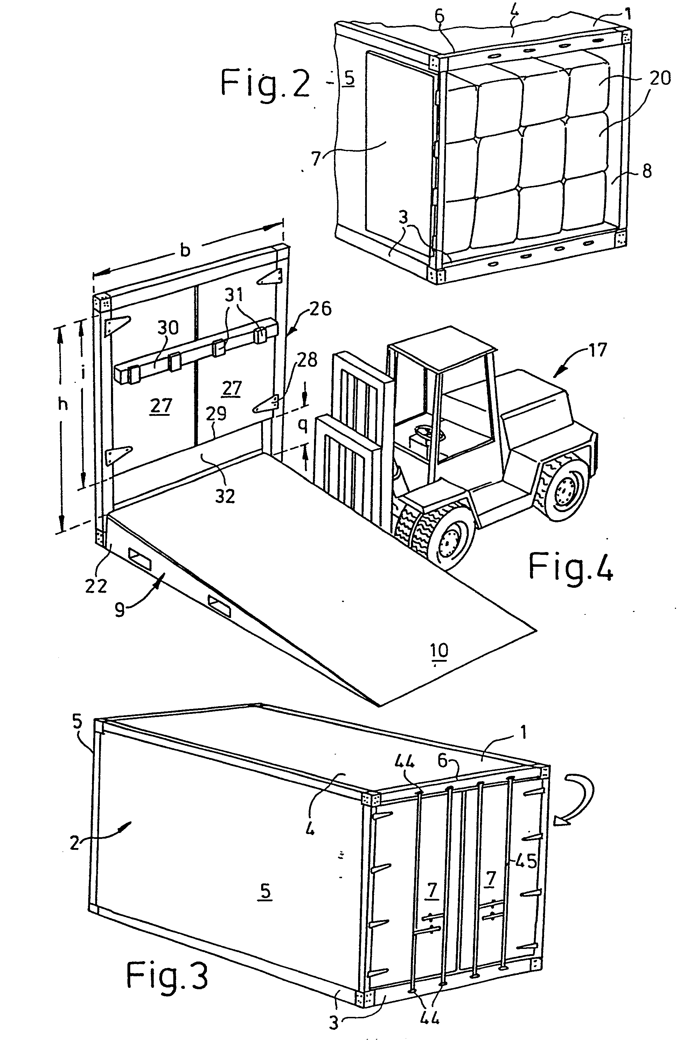

Dank der Auffahrrampe 9 kann ein Rolltrailer 15 mit heckwärtigen Fahrrollen 16 von einem Gabelstapler 17 in Schubrichtung x in den Laderaum 18 des Containers 2 ohne weiteres eingeschoben werden. Auf der Ladefläche 19 des Rolltrailers 15 sind quaderartige Transportgüter 20 gestapelt, die gemäss Fig. 2 im Laderaum 18 auf dessen Tragfläche 11 abgesetzt und dann durch die Türflügel 7 gesichert werden sollen (Fig. 3).

Die Auffahrrampe 9 ist – beispielsweise durch den Gabelstapler 17 – transportabel und an ihrer hohen Stirnseite 22 mit einem Türrahmen 26 ausgestattet, dessen äussere Breite b und dessen lichte Höhe h den entsprechenden Massen des Heckrahmens 6 gleichen. An diesen Türrahmen 26 sind zwei Klappflügel 27 einer Höhe i durch Scharniere 28 angelenkt und mittels eines in Konsolen 31 der Klappflügel 27 eingelegten balkenartigen Querriegels 30 fest verschliessbar. In der in Fig. 4 erkennbaren Schliesslage verläuft die untere Flügelkante 29 unter Bildung eines Spaltes 32 in einem Abstand q zur Fahrfläche 10 der Auffahrrampe 9.

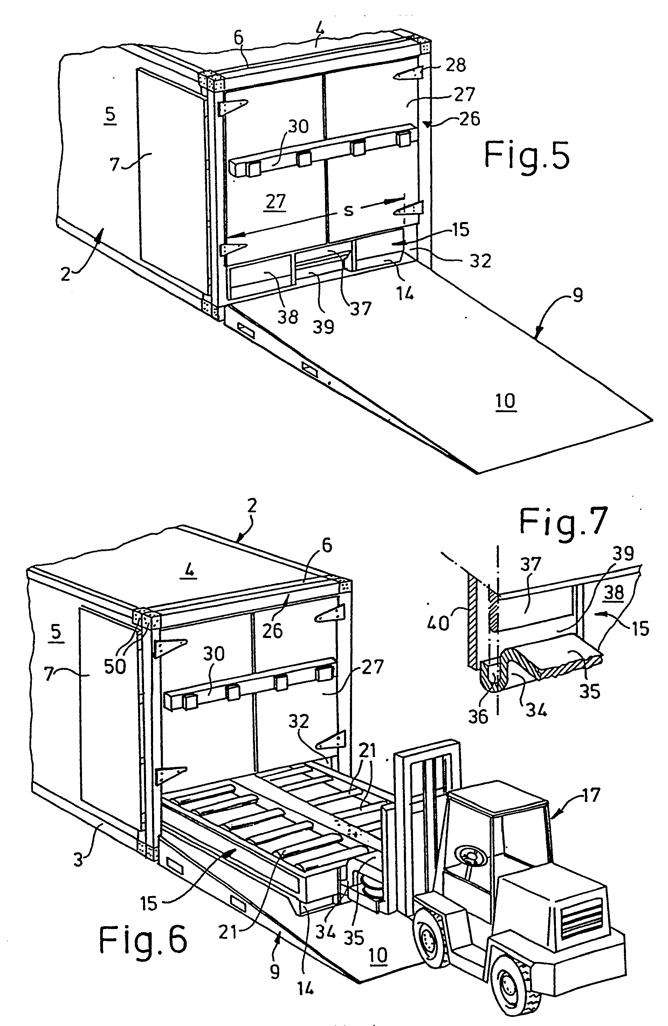

Die Klappflügel 27 sind in Einfahrstellung gemäss Fig. 1 geöffnet und werden nach dem Einbringen des Rolltrailers 15 geschlossen sowie verriegelt (Fig. 5). Der Türrahmen 26 ist jetzt seinerseits am Container 2 durch nicht näher dargestellte Halteorgane lösbar befestigt, wobei sich dank der Höhe q des Spaltes 32 die Flügelunterkanten 29 oberhalb der Trailerladefläche 19 befinden; diese wird durch die Fahrrollen 16 einerseits und einen Stützsteg 14 anderseits etwa horizontal gehalten.

Ist die in Fig. 5 gezeigte Schliesstellung der Einheit Container/Türrahmen/Auffahrrampe 2/26/9 erreicht, kann der Gabelstapler 17 an die Klappflügel 27 heranfahren. Eine in Fig. 7 erkennbare Kupplungsrinne 34 eines plattenähnlichen Hubarmes 35 des Gabelstaplers 17 wird angehoben, bis ihr Rinnenraum 36 einen Kupplungssteg 37 der Trailerstirnwand 38 aufnimmt. Dieser Kupplungssteg 37 ist vor einer Stirnwandkaverne 39 angeordnet, deren Rückwand 40 Anschlag für die Kupplungsrinne 34 ist.

Die Ladefläche 19 des Rolltrailers 15 ist mit Tragrollen 21 versehen, die ein reibungsarmes Abschieben der Transportgüter 20 ermöglichen; wird der Rolltrailer 15 durch den Spalt 32 abgezogen, rutschen die von den Klappflügeln 27 gehaltenen Transportgüter 20 über das Trailerheck 41 auf die Bodenplatte 3 des Containers 2. Ist dieser Abstreifvorgang beendet, wird der Türrahmen 26 vom Heckrahmen 6 gelöst und die Einheit Türrahmen/Auffahrrampe 26/9 vom Gabelstapler 17 entfernt; nunmehr können die Türflügel 7 in die Recköffnung 8 eingeschwenkt und ihrerseits gemäss Fig. 3 verriegelt werden.

Die zeitweilige Befestigung des Türrahmens 26 kann beispielsweise unter Zuhilfenahme von Riegelösen 44 erfolgen, welche am Heckrahmen 6 vorhanden sind und Riegelstangen 45 der Türflügel 7 in Schliessstellung aufnehmen, oder an Eckbeschlägen 50.

Dank der beschriebenen Vorrichtung ist es nunmehr möglich, in fünf Arbeitsschritten das Beladen eines Containers vorzunehmen:

1. Einfahren des beladenen Rolltrailers 15 in den Container 2 (Fig. 1);
2. Schliessen der als Abstreifeinrichtung dienenden Klappflügel 22 (Fig. 5);
3. Abziehen des palettenartigen Rolltrailers 15 (Fig. 6);
4. Entfernen der Einheit Auffahrrampe/Türrahmen 9/26 (Fig. 4);
5. Schliessen der Türflügel 7 des Containers 2.

Wie bereits angedeutet, ist der hier verwendete Rolltrailer 15 von sehr niedriger Bauhöhe n (ca. 20 cm), also eine Art Rollpalette, die vom Gabelstapler 17 in einem nicht gezeigten Magazinraum beladen, vom Gabelstapler 17 zum Container 2 gefahren und dort in beschriebener Weise entladen zu werden vermag. Dank der geringen Bauhöhe n des Rolltrailers 15 ist es sogar denkbar, diese in besonderen Fällen im Container 2 zu belassen und mit diesem zu versenden. Die Länge a dieser Rollpalette bzw. des Rolltrailers 15 entspricht bevorzugt der Länge des Laderaumes 18 oder ist geringfügig kürzer, um das Verstauen der Ladung 20 zu begünstigen. Auch soll die Trailerbreite s (Fig. 5) nicht viel geringer sein als die Breite jenes Laderaumes 18.

In Fig. 1 ist im Heckbereich 41 des Rolltrailers 15 eine bevorzugt aus begrenzt elastischem Werkstoff gefertigte Stossleiste 48 zu erkennen, deren Oberfläche (47) geneigt ist und das Abgleiten der Stückgüter 20 erleichtert.

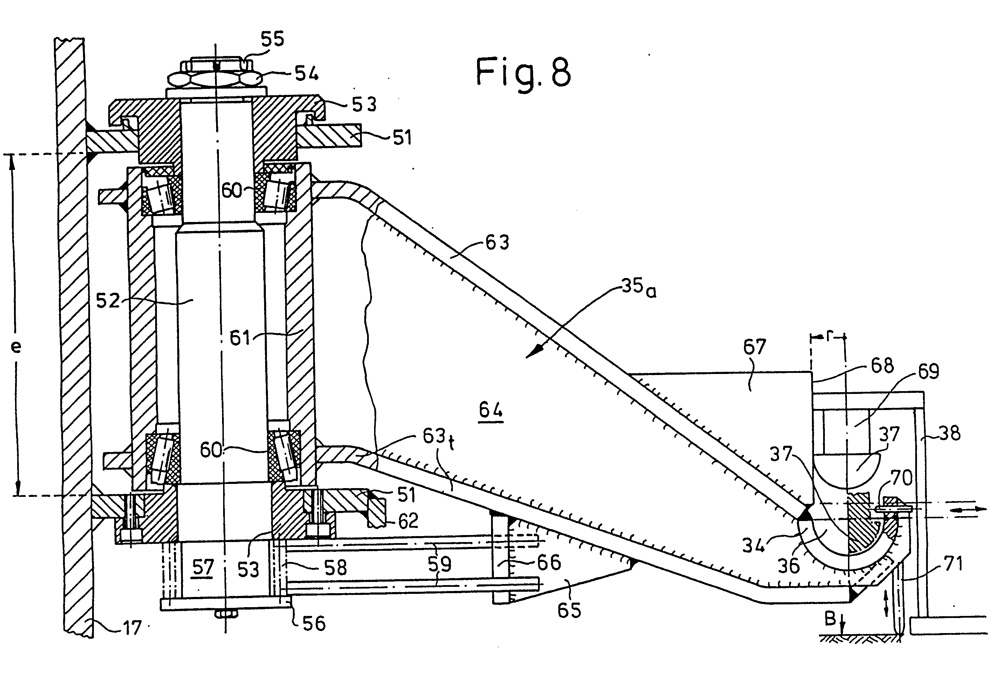

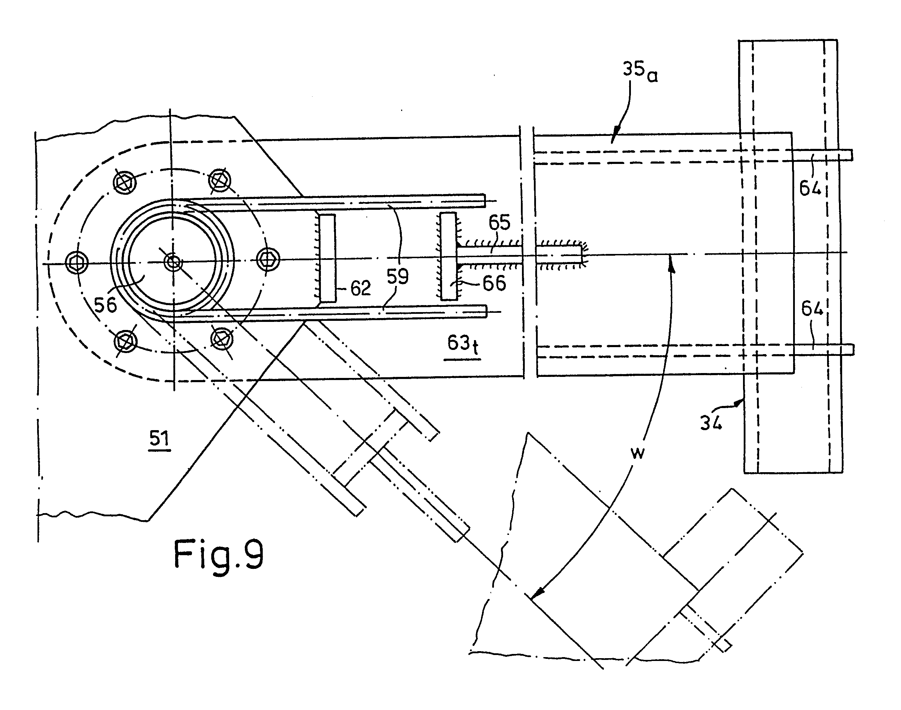

Eine andere Ausführungsform $35_a$ des in Fig. 7 gezeigten Hubarmes 35 mit Kupplungsrinne 34 ist in Fig. 8, 9 dargestellt; in – in einem Abstand e von beispielsweise 315 mm voneinander an dem bei 17 angedeuteten Gabelstapler festliegende – Lagerlaschen 51 ist ein vertikaler Achsbolzen 52 unter Zwischenschaltung zweier Kragenstücke 53 eingesetzt und nach oben hin u.a. durch Muttern 54 und Kronenscheiben 55 gesichert.

Das untere Ende des Achsbolzens 52 weist oberhalb eines Tellers 56 eine zylindrische Gleitfläche 57 für eine Stellfeder 58 auf, deren höhenversetzte Enden als parallele Tangentialstäbe 59 vom Achsbolzen 52 abragen.

Zwischen den Lagerlaschen 51 sind den Achsbolzen 52 umgebende Wälzlager 60 für eine Drehhülse 61 zu erkennen; an diese ist der zu ihr geneigte Hubarm $35_a$ mit seiner nach oben offenen Kupplungsrinne 34 angeschweisst; der Hubarm $35_a$ wird von – parallel zur Kupplungsrinne 34 verlaufenden – Armplatten 63, $63_t$ und sich zur

Kupplungsrinne 34 hin verjüngenden Stegblechen 64 gebildet. Unter der unteren Armplatte 63$_t$ ist ein querschnittlich T-förmiger Mitnehmerklotz 65 angebracht, an dessen Querstück 66 beidseits die Tangentialstäbe 59 der Stellfeder 58 zur mittigen Justierung bzw. Rückholung anliegen; der Hubarm 35$_a$ kann, wie insbesondere Fig. 9 verdeutlicht, aus seiner Mittellage nach beiden Seiten in einem Winkel w von etwa 45° verschwenkt werden.

In Fig. 8 ist bei 62 eine vertikale Anschlagzunge angedeutet, welche – bei einem bevorzugten Ausführungsbeispiel – zwischen den beiden Tangentialstäben 59 abwärts verläuft und diesen in deren Mittelstellung beidseits anliegt; beim Verschwenken des Hubarmes 35$_a$ nimmt dieser dann einen Tangentialarm 59 mit, wohingegen der andere – unter Erzeugung einer Rückstellkraft – an die Anschlagzunge 62 gedrückt wird.

Auf der oberen Armplatte 63 des Hubarmes 35$_a$ ist ein in Draufsicht rechteckförmiger Führungsklotz 67 für den Kupplungssteg 37 des Rolltrailers 15 befestigt; an der Stirnfläche 68 des Führungsklotzes 67 kann der balkenartige Kupplungssteg 37 abwärts gleiten und sich in die Kupplungsrinne 34 absenken. Der Radius r des querschnittlich von einem Halbkreis begrenzten, an Haltearmen 69 sitzenden Kupplungssteges 37 beträgt im gewählten Ausführungsbeispiel für eine Zuglast von etwa 5,5 t etwa 30 mm.

Ist der Kupplungssteg 37 in den Rinnenraum 36 eingesetzt, wird der von seitlichen – in der Kupplungsrinne 34 radial verschieblich vorgesehenen – Sicherungsstiften 70 gegen ungewolltes Abheben gesichert. Aus Gründen der Übersichtlichkeit ist die mechanische Verschiebeeinrichtung für die Sicherungsstifte 70 nicht weiter verdeutlicht. Sie schiebt in jedem Falle die Sicherungsstifte 70 nach dem beschriebenen Einsetzen des Kupplungssteges 37 über diesen und zieht sie selbsttätig – beispielsweise mittels eines am Fahrgrund B anschlagenden Längsstabes 71 – zurück, wenn das Ausklinken der Kupplung erfolgen soll.

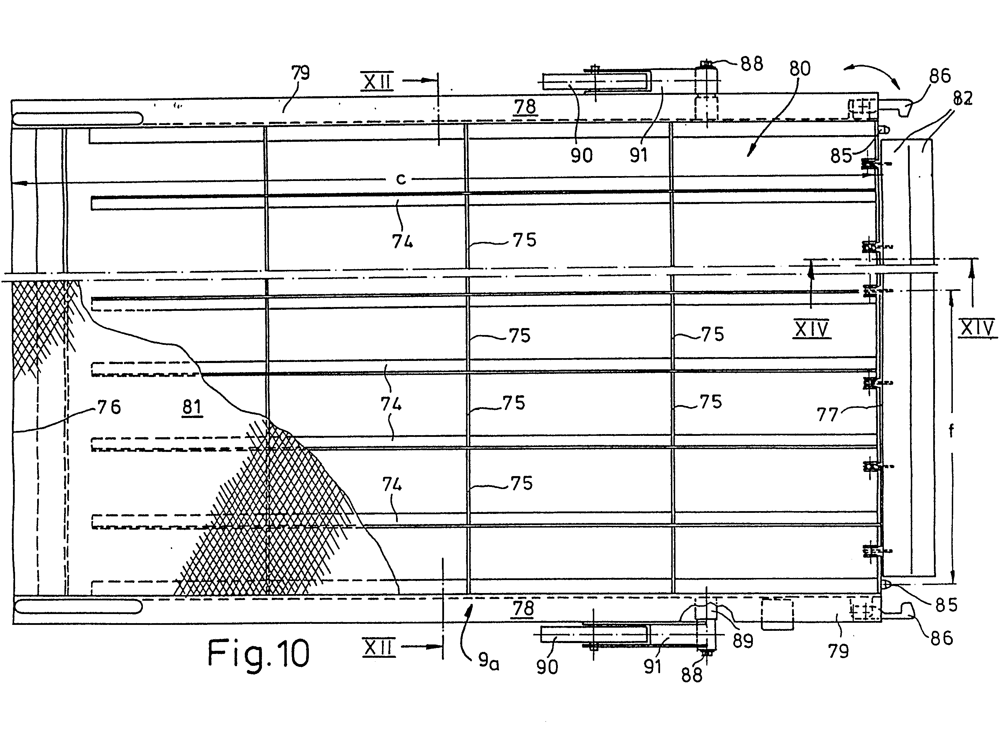

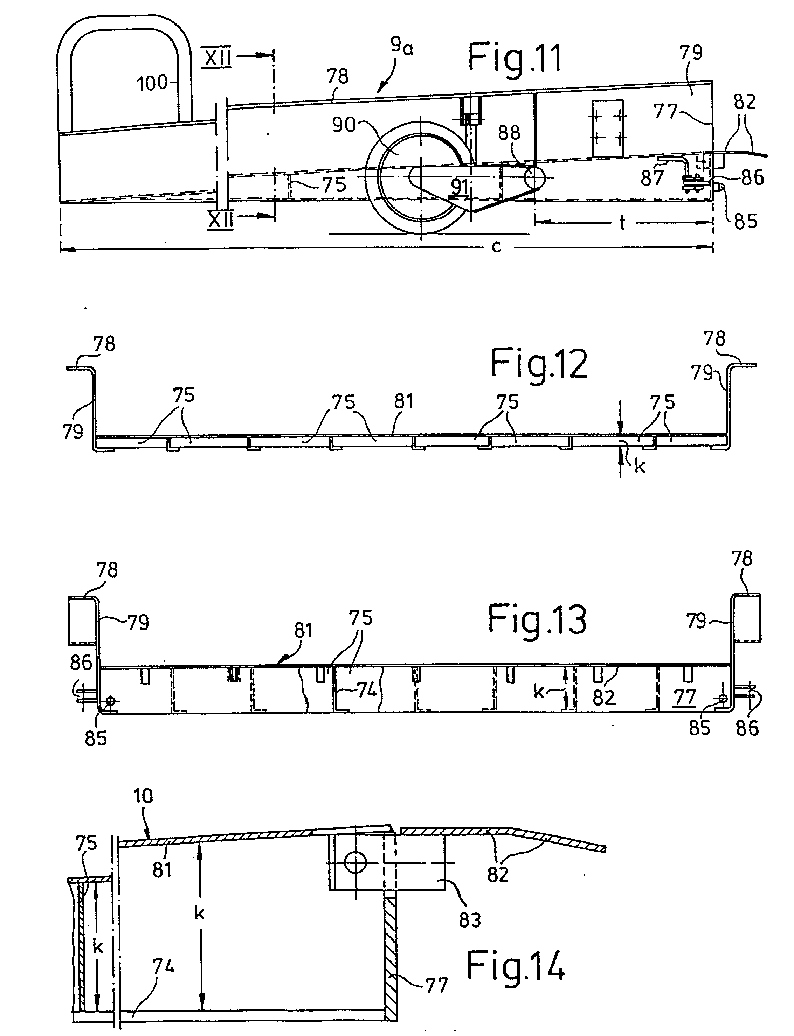

Die Auffahrrampe 9 kann gemäss dem in Fig. 10 ff. wiedergegebenen Ausführungsbeispiel 9$_a$ selbstfahrbar ausgebildet werden. Die Auffahrrampe 9$_a$ einer Länge von beispielsweise 3300 mm und einer halben Breite f von etwa 1150 mm weist mehrere L-förmige Stahlprofile 74 auf, deren Steghöhe k (Fig. 12–14) vom Rampenheck 76 zur Rampenstirn 77 stetig zunimmt. Zwischen den Stahlprofilen 74 verlaufen Querstege 75, die in ihrer Höhe der Steghöhe k angepasst sind. Auf diesem mit – obere Horizontalstreifen 78 aufweisenden – Seitenborden 79 versehenen Grundgestell 80 sind Platten 81 festgelegt, welche die Fahrfläche 10 bilden. Diese ist im übrigen im Bereich der Rampenstirn 77 durch abkragende Brückenbleche 82 auf Laschen 84 verlängert.

Ausserdem finden sich an der Rampenstirn 77 Steckbolzen 85 und seitlich schwenkbare Rastklinken 86 mit Griff 87 zum Festlegen der Auffahrrampe 9$_a$ am Container 2, der dazu mit nicht gezeigten Gegenorganen versehen ist, also mit Steckbohrungen für jene Steckbolzen 85 und Gegenrasten für die Rastklinken 86.

In einem Abstand t (beispielsweise 700 mm) von der Rampenstirn 77 sind Schwingenbolzen 88 in Bolzenbüchsen 89 für Räder 90 vorgesehen. Jedes dieser Räder 90 ist zwischen einem Schwingenpaar 91 an einer Radachse 92 gelagert.

Sowohl die Bolzenbüchsen 89 – mittels eines Hochsteges 93 – als auch Lager 94 für einen Lenkerzylinder 95 stützen sich gegen die Horizontalstreifen 78 der Seitenborde 79 ab.

Im Lenkerzylinder 95 läuft ein Kolben 96, der – zur Radachse 92 exzentrisch – über einen Achsstumpf 97 an die innenliegende Schwinge 91 angelenkt ist. Dank dieses Teleskopbeines 98 aus Lenkerzylinder 95 und Kolben 96 ist die Lage der Räder 90 gegenüber der Auffahrrampe 9$_a$ einstellbar, und zwar in den Grenzen eines Hubes H von etwa 120 mm; der bevorzugte Aussendurchmesser e der Räder 90 beträgt 400 mm.

Die Auffahrrampe 9$_a$ ist so in der Höhe den jeweiligen Erfordernissen anpassbar und kann – beispielsweise mit Hilfe von Bügeln 100 am Rampenheck 76 – in einfacher Weise bewegt werden; eines Gabelstaplers 17 bedarf es hierbei nicht mehr.

Die weiter oben erläuterten Steckbolzen 85 und Rastklinken 86 können – wie beschrieben – mit dem Container 2 unmittelbar verbunden werden – für diesen Fall sind die Befestigungsorgane für die Einheit aus Türrahmen 26 und Klappflügel 27 in der Zeichnung vernachlässigt. Bevorzugt jedoch werden die Steckbolzen 85 und die Rastklinken 86 dazu verwendet, den Türrahmen 26 an der Rampenstirn 77 festzulegen; die in Fig. 4 wiedergegebene Beladeeinheit ist somit selbstfahrend ausgestaltet.

**Patentansprüche**

1. Verfahren zum Beladen der Tragfläche (11) eines mit einer etwa vertikalen Ladeöffnung versehenen Transportbehälters oder Containers (2) mit Stückgut (20), insbesondere mit gestapelten Packeinheiten, das auf der Ladefläche (19) einer fahrbaren Palette, eines Rolltrailers (15) od. dgl. gestapelt und auf diesem in Schubrichtung (8) in den Laderaum (18) des Transportbehälters (2) eingeführt wird, dadurch gekennzeichnet, dass das Stückgut (20) durch ein Zurückführen des Rolltrailers (15) oder dgl. gegen die Schubrichtung (x) aus dem Laderaum (18) auf dessen Tragfläche (11) abgelegt wird.

2. Vorrichtung zum Beladen der Tragfläche (11) eines mit einer etwa vertikalen Ladeöffnung (8) versehenen Transportbehälters oder Containers (2) mit Stückgut (20), insbesondere mit gestapelten Packeinheiten, das auf der Ladefläche (19) einer fahrbaren Palette, eines Rolltrailers (15) od. dgl. gestapelt und auf diesem in Schubrichtung (x) in den Laderaum (18) des Transportbehälters (2) eingeführt wird, dadurch gekennzeichnet, dass der Ladeöffnung (8) des Transportbehälters (2) eine lösbare Abstreifeinrichtung (26, 27) zugeordnet ist, welche die Ladeöffnung (8) oberhalb der Ladefläche (19) des Rolltrailers (15) od. dgl. überdeckt und mit der Tragfläche (11) des Transportbehälters (2) einen horizontal verlaufenden Spalt (32) bildet, durch welchen der Rolltrailer (15) nach aussen führbar ist.

3. Vorrichtung nach Anspruch 2, dadurch gekennzeichnet, dass die Ladefläche (19) des Rolltrailes (15) od. dgl. reibungsmindernd ausgestaltet, bevorzugt von quer zu ihrer Schubrichtung (x) angeordneten Tragrollen (21) gebildet, ist.

4. Vorrichtung nach Anspruch 2 oder 3, dadurch gekennzeichnet, dass die Höhe (q) des Spaltes (32) zwischen Tragfläche (11) des Transportbehälters (2) und Abstreifvorrichtung (26, 27) gleich oder geringfügig grösser ist als die Bauhöhe (n) des Rolltrailers (15), wobei gegebenenfalls die Abstreifeinrichtung einen Rahmen (26) mit wenigstens einem dessen Rahmenfeld überspannenden Klappflügel (27) aufweist und die Masse (h, b) des Rahmens jenen eines die Ladeöffnung (8) begrenzenden Türrahmens (6) entsprechen.

5. Vorrichtung nach einem der Ansprüche 2 bis 4, dadurch gekennzeichnet, dass im Rahmen (26) zwei an diesen jeweils seitlich angelenkte Klappflügel (27) vorgesehen und zu der vom Türrahmen (6) abgekehrten Rahmenseite schwenkbar sind, wobei bevorzugtermassen die Klappflügel (27) durch wenigstens einen in Konsolen (31) einlegbaren Querriegel (30) in an sich bekannter Weise zueinander fluchtend gehalten sind.

6. Vorrichtung nach einem der Ansprüche 2 bis 5, dadurch gekennzeichnet, dass die Abstreifeinrichtung (26, 27) mit einer Auffahrrampe (9, 9a) für den Rolltrailer (15) zu einer transportierbaren Einheit fest verbunden ist sowie der Spalt (32) zwischen der Fahrfläche (10) der Auffahrrampe und der Unterkante (29) der/des Klappflügel/s (27) verläuft.

7. Vorrichtung nach Anspruch 2 oder 3 und/oder 6, gekennzeichnet durch eine in Schubrichtung (x) längsschnittlich keilförmig ausgebildete Auffahrampe (9, 9a), deren Fahrfläche (10) von der hohen Rampenstirn (22, 77) geneigt verläuft.

8. Vorrichtung nach Anspruch 7, dadurch gekennzeichnet, dass die Auffahrrampe (9a) nahe der Rampenstirn (77) mit Rädern (90) sowie mit Anschlusselementen (85, 86) versehen ist, wobei gegebenenfalls von der Rampenstirn wenigstens ein die Fahrfläche (10) verlängerndes Brückenblech (82) oder ein entsprechender Kragstreifen abragt.

9. Vorrichtung nach wenigstens einem der Ansprüche 2 bis 8, dadurch gekennzeichnet, dass die Abstreifeinrichtung (26, 27) an der Rampenstirn (77) der Auffahrrampe (9, 9a) fest oder mittels der Anschlusselemente (85, 86) lösbar festgelegt ist, welche bevorzugt als von der Rampenstirn (77) abragende Steckbolzen (85) und/oder als Rastklinken (86) ausgebildet sind.

10. Vorrichtung nach wenigstens einem der Ansprüche 2 bis 9, dadurch gekennzeichnet, dass die Auffahrrampe (9a) auf in Fahrrichtung verlaufenden Längsträgern (74) und diese verbindenden Querstegen (75) mit der Fahrfläche (10) versehen ist, die beidseits von Seitenborden (79) begrenzt ist, wobei gegebenenfalls jeder Längsträger (74) ein L-förmiges Profil sowie zur Rampenstirn (77) hin von zunehmender Steghöhe (k) ist und/oder die Höhe des Seitenbords (79) zur Rampenstirn (77) zunimmt und das Seitenbord nach oben hin in einem nach aussen abragenden Horizontalstreifen (78) endet.

11. Vorrichtung nach wenigstens einem der Ansprüche 2 bis 10, dadurch gekennzeichnet, dass von der Auffahrrampe (9a) bzw. deren Seitenbord (79) nahe der Rampenstirn (77) ein Bolzen (89) für wenigstens eine Schwinge (91) abragt, die andernends mit einem der Räder (90) über eine Radachse (92) verbunden ist, wobei gegebenenfalls das/die Rad/Räder (90) eines Seitenbords (79) zwischen einem Schwingenpaar (91) angeordnet ist/sind.

12. Vorrichtung nach Anspruch 11, dadurch gekennzeichnet, dass wenigstens eine Schwinge (91) nahe ihres Rades (90) über ein Teleskopbein (98) mit dem Seitenbord (79) verbunden ist, wobei das Teleskopbein (98) bevorzugt einen Kolben (96) in einem einends an der Auffahrrampe (9a) angelenkten Lenkerzylinder aufweist.

13. Vorrichtung nach Anspruch 3 oder 4, dadurch gekennzeichnet, dass der Rolltrailer (15) mit einer abwärts geneigten Heckfläche (47) versehen ist, die gegebenenfalls von einer längsschnittlich keilförmigen Stossleiste (48) des Rolltrailers (15) gebildet ist, und/oder dass die Aussenmasse (a,s) des Rolltrailers (15) od. dgl. mit Spiel den entsprechenden Innenmassen des Transportbehälters (2) angepasst sind.

14. Vorrichtung nach wenigstens einem der Ansprüche 2 bis 13, dadurch gekennzeichnet, dass Rolltrailer (15) oder Auffahrrampe (9a) an wenigstens einer Stirnseite (38, 77) wenigstens einen parallel zu dieser verlaufenden Kupplungssteg (37) mit abwärts gerichteter Kante aufweist, die in eine aufwärts geöffnete Kupplungsrinne (34) als Gegenkupplungsglied einsetzbar ist, wobei gegebenenfalls der Kupplungssteg einen nach unten teilkreisförmig gekrümmten Querschnitt aufweist (Fig.8).

15. Vorrichtung nach Anspruch 13 oder 14, dadurch gekennzeichnet, dass der Kupplungssteg (37) an einer Kupplungskaverne (39) des Rolltrailers (15), dessen Rückwand (40) einen Anschlag für das Gegenkupplungsglied (34) des Zugfahrzeuges (17) bildet, angeordnet ist, und/oder dass die Kupplungsrinne (34) an einem Kupplungsarm (35, 35a) festgelegt und dieser als Teil eines Zugfahrzeuges (17) an diesem bewegbar angebracht ist.

16. Vorrichtung nach Anspruch 14 oder 15, dadurch gekennzeichnet, dass der Kupplungsarm (35a) horizontal drehbar angeordnet und gegen die Rückstellkraft eines Kraftspeichers (58, 59) aus einer Mittelstellung schwenkbar ist.

17. Vorrichtung nach Anspruch 14 oder 16, dadurch gekennzeichnet, dass der Kupplungsarm (35a) mit einer Drehhülse (61) einen vertikalen Achsbolzen (52) des Zugfahrzeuges (17) umgibt, wobei der Achsbolzen bevorzugt zwischen Lagerlaschen (51) festgelegt ist und/oder dass der Kraftspeicher eine Schraubenfeder (58) mit frei endenden Tangentialstäben (59) ist, von denen jeder an einer Seite eines Quersteges (66) des Kupplungsarmes verläuft.

18. Vorrichtung nach Anspruch 16 oder 17, dadurch gekennzeichnet, dass die Schraubenfeder (58) ein freies Ende (57) des gegebenenfalls von einem Teller (56) unterfangenen Achsbolzens (52) umgibt und/oder dass zwischen den in Draufsicht in Abstand zueinander angebrachten Tangentialstäben (59) eine festliegende Anschlagzunge (62) steht.

19. Vorrichtung nach einem der Ansprüche 16 bis 18, dadurch gekennzeichnet, dass der Kupplungsarm (35ₐ) zur Kupplungsrinne (34) geneigt und/oder an der Kupplungsrinne eine Gleitfläche (68) für den Kupplungssteg (37) vorgesehen ist.

20. Vorrichtung nach wenigstens einem der Ansprüche 16 bis 19, dadurch gekennzeichnet, dass die Kupplungsrinne (34) eine lösbare, den in der Kupplungsrinne sitzenden Kupplungssteg (37) haltende Sicherungseinrichtung (70) aufweist, gegebenenfalls einen quer zum Rinnenprofil verlaufenden Sicherungsstift, welcher – nach dem Einsetzen des Kupplungssteges – selbsttätig verschiebbar ausgebildet ist.

## Claims

1. A method for loading the supporting surface (11) of a transport box or container (2) provided with an approximately vertical charging opening with a unit load (20), especially with piled packing units, which is piled on the loading area (19) of a portable pallet, a roll trailer (15) or the like and which is introduced on the latter into the cargo space (18) of the transport box (2) in the push direction (8), characterized in that the unit load (20) is deposited on the supporting surface (11) of the cargo space (18) by means of leading back the roll trailer (15) or the like in the opposite direction of the push (x).

2. A device for loading a supporting surface (11) of a transport box or container (2) provided with an approximately vertical charging opening with a unit load (20), especially with piled packing units, which is piled on the loading area (19) of a portable pallet, a roll trailer (15) or the like and which is introduced on the latter into the cargo space (18) of the transport box (2) in the push direction (8), characterized in that the charging opening (8) of the transport box (2) is provided with a detachable stripping device (26, 27) which overlaps the charging opening (8) above the loading area (19) of the roll trailer (15) or the like and which formes a horizontal gap (32) with the supporting surface (11) of the transport box (2), through which the roll trailer (15) can be led outwards.

3. A device according to claim 2, characterized in that the loading area (19) of the roll trailer (15) or the like is designed in such a way that it reduces the friction, preferably formed by support rollers (21) arranged transversely with regard to the push direction (x).

4. A device according to claim 2 or 3, characterized in that the height (q) of the gap (32) between the supporting surface (11) of the transport box (2) and the stripping device (26, 27) is equal or slightly greater than the overall height (n) of the roll trailer (15), with the stripping device possibly being provided with a frame (26) having at least one folding wing (27) spanning the frame zone, and with the measures (n, b) of the frame corresponding to those of a door framing (6) limiting the charging opening (8).

5. A device according to one of the claims 2 to 4, characterized in that in the frame (26) there are provided two folding wings (27) hinged on each side of the frame laterally which are pivoted towards the frame side turned away from the door frame (6), with the folding wings (27) being preferably in alignment with each other in the known way be means of at least one cross bracket (30) insertable in the consoles (31).

6. A device according to one of the claims 2 to 5, characterized in that the stripping device (26, 27) is firmly linked with ramp (9, 9ₐ) for the roll trailer (15) thus forming a transportable unit, and that the gap (32) runs between the rolling surface (10) of the ramp and the bottom edge (29) of the folding wing/s (27).

7. A device according to claim 2 or 3 and/or 6, characterized in that a ramp (9, 9ₐ) which is cuneiform with regard to its longitudinal profile in push direction (x), and whose rolling surface (10) runs inclined from the high ramp face (22, 27).

8. A device according to claim 7, characterized in that the ramp (9ₐ) is provided with wheels (90) near the ramp front (77) as well as with connecting elements (85, 86), with possibly at least one bridge sheet metal (82), which lengthens the rolling surface or a corresponding jib strip projecting from the ramp face.

9. A device according to at least one of claims 2 to 8, characterized in that the stripping device (26, 27) is fixed to the ramp front (77) of the ramp (9, 9ₐ) non-detachably or detachably by means of connecting elements (85, 86), the elements being designed as socket pins (85) and/or as notch stops.

10. A device according to at least one of the claims 2 to 9, characterized in that the ramp (9ₐ) is provided with the rolling surface (10), which is limited on both sides by lateral rims (79), on longeron spars (74) running in driving direction and transverse crosspieces (75) connecting the longeron spars (74), with possibly every longeron spar (74) being an L-shaped profile and having a height of the crosspiece (k) which increases towards the ramp front (77) and/or the height of the lateral rim (79) increases towards the ramp front (77) and the lateral rim terminates towards the top in a horizontal strip (78) projecting outwards.

11. A device according to at least one of the claims 2 to 10, characterized in that at least one pin (89) projects from the ramp (9ₐ) or its lateral rim (79) near the ramp face (77) for at least one wing (91) which is connected on the other side with one of the wheels (90) by means of a wheel axle (92), with the wheel/s (90) of a lateral rim (79) being possibly arranged between a pair of wings (91).

12. A device according to claim 11, characterized in that at least one wing (91) is connected near its wheel (90) with the lateral rim (79) by means of a telescope leg (98), the latter preferably being provided with a piston (96) in a guiding cylinder which is hinged on one side on the ramp (9$_a$).

13. A device according to claim 3 or 4, characterized in that the roll trailer (15) is provided with a rear surface (47) inclined downwards which is possibly formed by a buffer protecting strip (48) of the roll trailer (15) which is cuneiform with regard to its longitudinal profile, and/or that the dimensions (a, s) of the roll trailer (15) or the like are adapted with clearance to the corresponding inside dimension of the transport box (2).

14. A device according to at least one of the claims 2 to 13, characterized in that the roll trailer (15) or ramp (9$_a$) is provided at least at one front side (38, 77) with at least one coupling crosspiece (37) running parallel to the front side and having an edge directed downwards which can be inserted into a coupling channel (34) opened upwards as a counter-coupling element, with the coupling crosspiece possibly showing a cross-section curved downwards like a graduated circle (fig. 8).

15. A device according to claim 13 or 14, characterized in that the coupling crosspiece (37) is arranged at a coupling cavern (39) of the roll trailer (15), whose back wall (40) forms a stop for the counter-coupling element (34) of the pulling vehicle (17), and/or that the coupling channel (34) is fixed at a coupling arm (35, 35$_a$) and that the latter is arranged movably on the pulling vehicle (17) as a part of it.

16. A device according to claim 14 or 15, characterized in that the coupling arm (35$_a$) is arranged horizontally in a rotating manner and is slewable from an intermediate position against the restoring force of an energy accumulator (58, 59).

17. A device according to claim 14 or 16, characterized in that the coupling arm (35$_a$) surrounds with a turn sleeve (61) a vertical king pin (52) of the pulling vehicle (17), with the king pin being preferably fixed between bearing clips (51), and/or that the energy accumulator is a coil spring (58) with freely terminating tangential bars (59) each of which runs on one side of a transverse crosspiece (66) of the coupling arm.

18. A device according to claim 16 or 17, characterized in that the coil spring (58) surrounds a free end (57) of the king pin (52), which is possibly underpinned by means of a plate (56), and/or that there is a stop tongue (62) fixed between the tangential bars (59) which are placed at a distance to each other in top view.

19. A device according to one of the claims 16 to 18, characterized in that the coupling arm (35$_a$) is inclined towards the coupling channel (34), and/or that a sliding surface (68) for the coupling crosspiece (37) is provided at the coupling channel.

20. A device according to at least one of the claims 16 to 19, characterized in that the coupling channel (34) is provided with a detachable safety device (70) holding the coupling crosspiece (37) situated in the coupling channel, possibly a safety pin running transversely with regard to the channel profile, the safety pin being – after the insertion of the coupling crosspiece – displacable automatically.

## Revendications

1. Procédé pour le chargement de la surface porteur (11) d'une caisse mobile ou d'un container (2) pourvu(e) d'une ouverture de chargement à peu près verticale avec une charge isolée (20) en particulier avec des unités d'emballage empilées, laquelle est palettisée sur la plateforme de chargement (19) d'une palette mobile, d'une remorque UFR (15) ou d'une chose semblable et qui est introduite sur celle-ci dans le compartiment à marchandises (18) de la caisse mobile (2) dans le sens de la poussée, caractérisé en ce que la charge isolée (20) est déposée sur la surface porteur (11) du compartiment à marchandises (18) par le fait que la remorque UFR (15) ou une chose semblable est sortie en sens inverse (x) de la poussée.

2. Dispositif pour le chargement de la surface porteur (11) d'une caisse mobile ou d'un container (2) pourvu(e) d'une ouverture de chargement à peu près verticale (8) avec une charge isolée (20) en particulier avec des unités d'emballage empilées, laquelle est palettisée sur la plateforme de chargement (19) d'une palette mobile d'une remorque UFR (15) ou d'une chose semblable et qui est introduite sur celle-ci dans le compartiment à marchandises (18) de la caisse mobile (2) dans le sens de la poussée (x) caractérisé en ce que l'ouverture de chargement de la caisse mobile (2) est pourvue d'un dispositif racleur détachable (26, 27) qui recouvre l'ouverture de chargement (8) au-dessus de la plateforme de chargement (19) de la remorque UFR (15) ou d'une chose semblable et qui forme une fissure horizontale (32) avec la surface porteur (11) de la caisse mobile (2), par laquelle on peut sortir la remorque UFR (15).

3. Dispositif selon la revendication 2, caractérisé en ce que la plateforme de chargement (19) de la remorque UFR (15) ou d'une chose semblable est amenagée de façon à diminuer la friction de préférence formée de rouleaux porteurs (21) placés transversalement par rapport au sens de la poussée (x).

4. Dispositif selon la revendication 2 ou 3, caractérisé en ce que l'hauteur (q) de la fissure (32) entre la surface porteur (11) de la caisse mobile (2) et le dispositif racleur (26, 27) est égale ou légèrement supérieur à l'hauteur de construction (n) de la remorque UFR (15), le dispositif racleur (26, 27) étant pourvu, le cas échéant, d'un cadre (26) avec au moins un battant à bascule en haut (27) recouvrant la zone de cadre et que les dimensions (h, b) du cadre correspondent à celles-ci d'un châssis à panneaux (6) limitant l'ouverture de chargement (8).

5. Dispositif selon une des revendications 2 à 4, caractérisé en ce que dans le cadre (26) sont prévus deux battants à bascule en haut (27) articulés latéralement par des charnières à chaque côté de celui-ci qui sont orientables vers le côté du cadre détourné du châssis à panneaux (6), les battants à bascule en haut (27) étant de préférence alignés de manière au fait notoire par au moins une traverse (30) insérable dans des consoles (31).

6. Dispositif selon une des revendications 2 à 5, caractérisé en ce que le dispositif racleur (26, 27) est relié de manière non détachable à une rampe d'accès (9, 9a) pour la remorque UFR (15) qui constituent ainsi une unité transportable et que la fissure (32) se trouve entre la surface de roulement (10) de la rampe d'accès et le bord inférieur du/des battant(s) à bascule en haut (27).

7. Dispositif selon la revendication 2 ou 3 et/ou 6, caractérisé par une rampe d'accès (9, 9a) qui est cunéiforme en ce qui concerne son profil longitudinal dans le sens de la poussée (x), et dont l'allure de la surface de roulement (10) est inclinée partant du haut front de la rampe (22, 77).

8. Dispositif selon la revendication 7, caractérisé en ce que la rampe d'accès (9a) est munie de roues (90) près du front de la rampe (77) ainsi que d'éléments de raccord (85, 86), le cas échéant du front de la rampe s'élevant une tôle de pont (82) qui prolonge la surface de roulement (10) ou une bande en console correspondante.

9. Dispositif selon au moins une des revendications 2 à 8, caractérisé en ce que le dispositif racleur (26, 27) est fixé au front (77) de la rampe d'accès (9, 9a) de manière non détachable ou détachable moyennant les éléments de raccord (85, 86), ces éléments étant formés de préférence comme axes débrochables (85) s'élevant du front de la rampe (77) et/ou comme cliquet d'arrêt (86).

10. Dispositif selon au moins une des revendications 2 à 9, caractérisé en ce que la rampe d'accès (9a) possède sur des longerons (74) dont l'allure correspond au sens de roulement et des traverses transversales (75) reliant ces longerons, la surface de roulement (10) qui est limitée des deux côtés par des bords latéraux (79), le cas échéant chaque longeron étant un profilé en forme d'un L et ayant une hauteur de traverse (k) augmentant en direction du front de la rampe (77) et/ou l'hauteur du bord latéral (79) augmentant vers le front de la rampe (77) et que le bord latéral se termine vers le haut dans une bande horizontale (78) s'élevant vers l'extérieur.

11. Dispositif selon au moins une des revendications 2 à 10, caractérisé en ce qu'un boulon (89) s'élève de la rampe d'accès (9a) ou plutôt de son bord latéral (79) près du front de la rampe (77) pour au moins une aile (91) qui est reliée à l'autre côté à un des rouleaux (90) moyennant un essieu (92), le cas échéant le/les rouleau (x) d'un bord latéral (79) étant placé(s) entre une paire d'ailes (91).

12. Dispositif selon la revendication 11, caractérisé en ce qu'au moins une aile (91) est reliée près de son rouleau au bord latéral (79) moyennant une jambe télescopique (98), la jambe télescopique (98) possédant de préférence un piston (96) dans un cylindre de direction qui est articulé à un côté à la rampe d'accès (9a).

13. Dispositif selon la revendication 3 ou 4, caractérisé en ce que la remorque UFR (15) possède une surface arrière (47) dirigée vers le bas qui est formée, le cas échéant, par un rebord pare-choc (48) de la remorque UFR (15) qui est cunéiforme en ce qui concerne son profil longitudinal et/ou que les dimensions d'encombrement (a, s) de la remorque UFR (15) ou d'une chose semblable sont adaptées avec jeu aux dimensions correspondantes dans l'œuvre de la caisse mobile (2).

14. Dispositif selon au moins une des revendications 2 à 13, caractérisé en ce que la remorque UFR (15) ou la rampe d'accès (9a) possède à au moins un front (38, 77) au moins une traverse d'accouplement (37) située parallèlement à ce front et ayant une arête dirigée vers le bas qui est insérable comme élément de contre-accouplement dans un conduit d'accouplement (34) ouvert vers le bas comme un cercle gradué (fig. 8).

15. Dispositif selon la revendication 13 ou 14, caractérisé en ce que la traverse d'accouplement (37) est placée à une caverne d'accouplement (39) de la remorque UFR (15) dont la face arrière (40) constitue un arrêt pour l'élément de contre-accouplement (34) du véhicule de traction (17) et/ou que le conduit d'accouplement (34) est fixé à un bras d'accouplement (35, 35a) et que celui-ci est articulé de façon mobile au véhicule de traction (17) constituant ainsi une partie de celui-ci.

16. Dispositif selon la revendication 14 ou 15, caractérisé en ce que le bras d'accouplement (35a) est placé horizontalement de façon mobile et qu'il est orientable d'une position centrale contre la force de rappel d'un accumulateur d'énergie (58, 59).

17. Dispositif selon la revendication 14 ou 16, caractérisé en ce que le bras d'accouplement (35a) entoure avec une douille tournante (61) un axe vertical (52) du véhicule de traction (17), l'axe étant fixé de préférence entre des attaches de palier (51) et/ou que l'accumulateur d'énergie est un ressort à boudin (58) avec des barres tangentielles (59) se terminant librement dont chacune est placée à un côté d'une traverse transversale (66) du bras d'accouplement.

18. Dispositif selon la revendication 16 ou 17, caractérisé en ce que le ressort à boudin (58) entoure une libre extrémité (57) de l'axe (52) soutenu le cas échéant par une assiette (56) et/ou qu'il y a une lame d'arrêt fixe entre les barres tangentielles (59) qui sont fixées avec espacements en vue de dessus.

19. Dispositif selon une des revendications 16 à 18, caractérisé en ce que le bras d'accouplement (35a) est incliné vers le conduit d'accouplement (34) et/ou qu'il est prévue une surface de glissement (68) au conduit d'accouplement destinée à la traverse d'accouplement (37).

17       0 111 887       18

20. Dispositif selon au moins une des revendications 16 à 19, caractérisé en ce que le conduit d'accouplement (34) possède un dispositif de consolidation (70) détachable tenant la traverse d'accouplement (37) se trouvant dans le conduit d'accouplement et le cas échéant possède une goupille de sécurité placée transversalement par rapport au profil du conduit, cette goupille étant déplaçable automatiquement – après le placement de la traverse d'accouplement.

Fig.1

0 111 887

Fig.2

Fig.4

Fig.3

Fig.5

Fig.6

Fig.7

Fig. 8

Fig.9

Fig.10

Fig.11

Fig.12

Fig.13

Fig.14

Fig.15

Fig.16

0 111 887